# EUROPEAN PATENT APPLICATION

(11) **EP 4 706 921 A1**
(43) Date of publication of application: **11.03.2026**
(21) Application number: 25193052.5
(22) Date of filing: 31.07.2025
(51) Int. Cl.: B26F 1/40, B26F 1/44

(54) **ELECTRODE NOTCHING MOLD FOR SECONDARY BATTERY**

(30) Priority: 06.09.2024 KR 20240121457
(71) Applicant: GSPCompany Co., Ltd., Cheonan-si, Chungcheongnam-do 31026 (KR)
(72) Inventor: WOO, Sun Hark, 31026 Chungcheongnam-do (KR)
(74) Representative: Acapo Onsagers AS

(57) **Abstract**

Provided is an electrode notching mold for a secondary battery. The electrode notching mold includes a cover portion including an upper plate and a lower plate, a cutting portion including a plurality of upper modules and a plurality of lower modules, which are spaced apart from and facing each other, and a plurality of cut portions in a press-fit space between modules, a plurality of ascending-descending portions configured to ascend or descend the upper plate, a plurality of guide portions connecting the plurality of upper modules to the plurality of lower modules, and a pressing portion configured to press-fit films.

## Description

### CROSS-REFERENCE TO RELATED APPLICATIONS

This application claims the benefit of Korean Patent Application No. 10-2024-0121457, filed on September 6, 2024, in the Korean Intellectual Property Office, the entire disclosure of which is incorporated herein by reference for all purposes.

### BACKGROUND

### 1. Field of the Invention

One or more embodiments relate to an electrode notching mold for a secondary battery.

### 2. Description of the Related Art

In the manufacturing process of secondary batteries, a mold is essentially used to mold a pouch-shaped secondary battery. An existing mold has an integrated structure, which led to problems including increased mold weight, increased worker burden, and decreased production line flexibility. If such a mold is used, defects may increase in mass-produced products, and there is a possibility that a non-uniform quality may occur for each production line. In particular, the larger the product, the more serious this problem becomes.

An existing integrated-type mold becomes difficult to handle due to the increased size and weight of the mold in the process of producing large products, and mold replacement and maintenance may take a lot of time, which may lower productivity. Additionally, it is difficult to maintain the same quality for each line, so a technical solution is needed to produce large products stably.

To solve these problems, there is a need to develop a new type of mold capable of reducing the weight of the mold, shortening the replacement time, and maintaining the uniform quality for each line. This is an important factor in the production of high-value products such as secondary batteries.

The above description is information the inventor(s) acquired during the course of conceiving the present disclosure, or already possessed at the time, and was not necessarily publicly known before the present application was filed.

### SUMMARY

Embodiments provide a notching mold of a film for a secondary battery pouch that may reduce the weight of the mold, shorten the replacement time, and maintain the uniform quality for each line.

The technical tasks obtainable from the present disclosure are non-limited by the above-mentioned technical tasks. And, other unmentioned technical tasks can be clearly understood from the following description by those having ordinary skill in the technical field to which the present disclosure pertains.

According to an aspect, there is provided an electrode notching mold for a secondary battery, the electrode notching including a cover portion including an upper plate in a plate shape and a lower plate spaced apart from and facing the upper plate, a cutting portion including a plurality of upper modules coupled to a lower surface of the upper plate, spaced apart from and facing each other, and having a plate shape, a plurality of lower modules coupled in parallel to each of the plurality of upper modules on an upper surface of the lower plate and configured to form a press-fit space between the plurality of lower modules, and a plurality of cut portions each formed on facing surfaces of each of the plurality of lower modules and having a shape of a cutting blade edge, a plurality of ascending-descending portions formed to be linearly driven and configured to ascend or descend the upper plate as a driving direction is provided between the upper plate and the lower plate perpendicular to the upper surface of the lower plate, a plurality of guide portions having a pillar shape, having one end provided in each of the plurality of lower modules, and having the other end penetrating each of the plurality of upper modules, and a pressing portion provided in the upper plate and configured to press-fit films to the upper surface of the lower plate while descending toward the press-fit space.

The plurality of lower modules may be configured to form a plurality of pairs by further including a plurality of modules having different shapes and sizes of portions forming the press-fit space.

Each of the plurality of cut portions may be formed to have a width and a height smaller than each of the films and be configured to cut a portion of the films, except for an electrode tab area.

The plurality of lower modules may be configured to form, as a plurality of cutting guide members having a frame shape is provided on a lower side of each of the plurality of cut portions, a cutting space in which a cut film descends to each of the plurality of cutting guide members.

The pressing portion may include a press-fit plate in contact with the films and a film support protruding from the press-fit plate in a direction of the lower plate.

The film support may have a frame shape with a height corresponding to the minimum distance between the press-fit plate and the lower plate.

Additional aspects of embodiments will be set forth in part in the description which follows and, in part, will be apparent from the description, or may be learned by practice of the disclosure.

According to embodiments, an electrode notching mold for a secondary battery may reduce the weight and replacement time of a mold by separating a lower module of a cutting portion into a plurality of detachable lower modules and may enable a product to be enlarged.

According to embodiments, a plurality of lower modules may change the product specifications according to the design requirements by further including modules having different shapes and sizes of cutting holes, and even in this case, the effects of high mold replacement efficiency due to a detachable structure are utilized again.

The effects of the electrode notching mold for the secondary battery are not limited to the above-mentioned effects, and other unmentioned effects can be clearly understood from the following description by one of ordinary skill in the art.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a perspective view illustrating an electrode notching mold for a secondary battery according to an embodiment; and
FIG. 2 is a perspective view illustrating an electrode notching mold for a secondary battery from which an upper plate is removed, according to an embodiment.

### DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components regardless of drawing numbers and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. It should be noted that if one component is described as being "connected," "coupled" or "joined" to another component, the former may be directly "connected," "coupled," and "joined" to the latter or "connected", "coupled", and "joined" to the latter via another component.

A component, which has the same common function as a component included in any an embodiment, will be described by using the same name in other embodiments. Unless stated otherwise, the configuration described in any an embodiment may be applied to other embodiments, and repeated descriptions will be omitted.

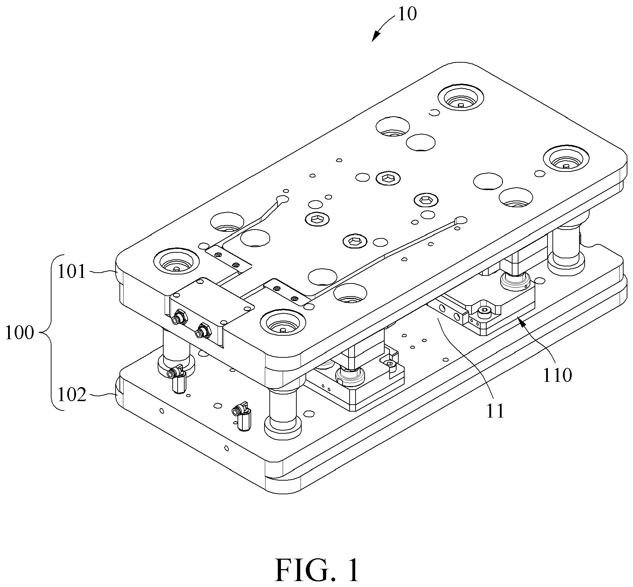

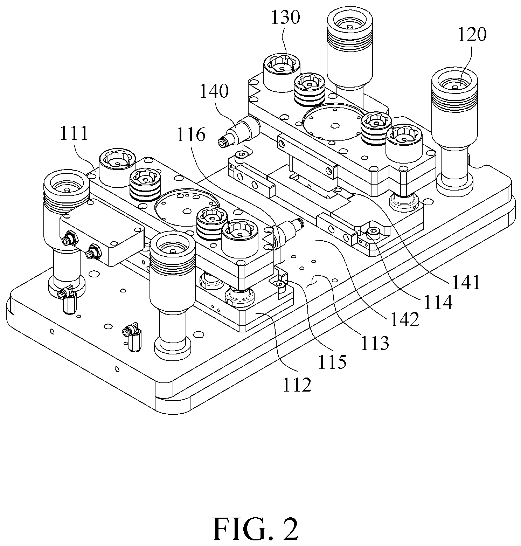

The embodiments are described with reference to the drawings below. For reference, FIG. 1 is a perspective view illustrating an electrode notching mold for a secondary battery 10 according to an embodiment, and FIG. 2 is a perspective view illustrating the electrode notching mold for the secondary battery 10 from which an upper plate 101 is removed, according to an embodiment.

The electrode notching mold for the secondary battery 10 may include a cover portion 100, a cutting portion 110, a plurality of ascending-descending portions 120, a film support, and a pressing portion (not shown).

The cover portion 100 may include the upper plate 101 in a plate shape and a lower plate 102 spaced apart from and facing the upper plate 101. For example, when the lower plate 102 is placed on a shelf, the upper plate 101 may be disposed parallel to the lower plate 102, thereby forming the upper and lower structures of a mold. In the parallel-disposed state, the upper plate 101 and the lower plate 102 may each have a plurality of holes, and the holes of the upper plate 101 and the holes of the lower plate 102 may be formed at opposite positions, respectively. Accordingly, the upper plate 101 and the lower plate 102 may allow the plurality of ascending-descending portions 120 and a plurality of pressing portions (not shown) to be provided perpendicular to the upper plate 101 and the lower plate 102 without inclination, thereby increasing the processing precision.

The cutting portion 110 may include a plurality of upper modules 111, a plurality of lower modules 112, and a plurality of cut portions 114.

The plurality of upper modules 111 may have a plate shape, be coupled to the lower surface of the upper plate 101, and be spaced apart from and facing each other. The plurality of lower modules 112 may be coupled in parallel to each of the plurality of upper modules 111 on the upper surface of the lower plate 102 and may form a press-fit space 113 between the plurality of lower modules 112. Each of the plurality of cut portions 114 may be formed on the facing surfaces of the plurality of lower modules 112 and may have a shape of a cutting blade edge. For example, in a state in which the plurality of lower modules 112 sits on the lower plate 102, as the plurality of upper modules 111 is coupled to the upper plate 101, the cutting portion 110 may allow the plurality of upper modules 111 and the plurality of lower modules 112 to be spaced apart from and facing each other like the two plates.

Here, the cutting portion 110 may have films for a secondary battery pouch in the press-fit space 113 formed by the plurality of lower modules 112 and the upper surface of the lower plate 102 and may have a structure in which the films may be cut as the plurality of cut portions 114 becomes the edges of the surfaces forming the press-fit space 113. This may be a configuration that facilitates the installation, replacement, and removal of the cutting portion 110 and may allow the installation, replacement, and removal of the cutting portion 110 to be partially performed using the fact that the plurality of lower modules 112 is formed as independent modules.

Each of the plurality of cut portions 114 may be formed to have a width and a height smaller than each of the films and may cut a portion of the films, except for an electrode tab area. In addition, the plurality of cut portions 114 may be spaced apart from each other by the plurality of lower modules 112, which is spaced apart from and facing each other, using the central axis of the press-fit space 113 as a reference point. Through this, the plurality of cut portions 114 may have a structure in which only both ends of the films are cut through the blade edges of the plurality of cut portions 114 without cutting around the central axis of the films in addition to the electrode tab area. This may be the same as the shape of a mold in which a plurality of cavities is formed in a radial direction, so it may be possible to cut a portion of both surfaces of the films in one sweep and increase work efficiency. For reference, one or more of interference-fit coupling, bolt coupling, slide coupling, magnet coupling, and clamp coupling may be applied to the detachable coupling between each module and the plate.

The plurality of lower modules 112 may form a plurality of pairs by further including a plurality of modules having different shapes and sizes of the portions forming the press-fit space 113. That is, each of the plurality of lower modules 112 may be configured to be paired with one lower module, and the shapes and sizes of the cross-sections to form the press-fit space 113, which is formed for each pair of lower modules, may be different from each other. Accordingly, in a situation in which the specifications of the notching mold need to be adjusted due to a change in design requirements, the specifications of the notching mold may be adjusted simply by separating one or more of a pair of the plurality of lower modules 112 from the lower plate 102 and replacing the pair of the plurality of lower modules 112 with another lower module that meets the changed design requirements. Accordingly, the cutting portion 110 may form the electrode tabs with various dimensions and shapes on the films for the secondary battery pouch. Since the typical electrode notching mold for a secondary battery including the present disclosure has a structure in which the upper plate 101 and the plurality of upper modules 111 ascend or descend, it may be possible to replace the plurality of lower modules 112 located inside the electrode notching mold for the secondary battery 10 by ascending a plate without additional replacement equipment in other disclosures as well. That is, the replacement structure of the plurality of lower modules 112 of the cutting portion 110 may be a modular configuration applicable not only to the present disclosure but also to typical mold equipment for notching a film for a secondary battery and may have high versatility in addition to work convenience.

Furthermore, as a plurality of cutting guide members 115 having a frame shape is provided on the lower side of each of the plurality of cut portions 114, the plurality of lower modules 112 may form a cutting space 116 in which a cut film descends to each of the plurality of cutting guide members 115. For example, the plurality of cutting guide members 115 may have a frame shape and may have a structure in which the cut film is received in the lower side of the plurality of cut portions 114 as the plurality of lower modules 112 is provided on the facing surfaces on the lower side of each of the plurality of cut portions 114. Accordingly, the plurality of cutting guide members 115 may prevent the films from being separated from a product by force generated during the cutting operation.

The plurality of ascending-descending portions 120 may be formed to be linearly driven and may ascend or descend the upper plate 101 as a driving direction is provided between the upper plate 101 and the lower plate 102 perpendicular to the upper surface of the lower plate 102. For example, the plurality of ascending-descending portions 120 may have a pillar shape and may be provided to support the upper plate 101 from the lower plate 102, thereby ascending or descending the upper plate 101. Here, the plurality of ascending-descending portions 120 may be provided at different positions and may support, through the pillar shape, the upper plate 101 in a state in which the upper plate 101 is spaced apart from the lower plate 102 by a predetermined distance.

Furthermore, the linear driving method of the plurality of ascending-descending portions 120 may be formed in a telescopic shape and may have a motor or hydraulic-type driving member, thereby ascending or descending the upper plate 101 according to the adjustable length.

A plurality of guide portions 130 may have a pillar shape, having one end provided in each of the plurality of lower modules 112, and having the other end penetrating each of the plurality of upper modules 111. This may be a configuration that allows the plurality of upper modules 111 to ascend or descend together with the upper plate 101, and the plurality of guide portions 130 may be formed in the telescopic shape like the plurality of ascending-descending portions 120.

The pressing portion (not shown) may be provided in the upper plate 101 and may press-fit the films to the upper surface of the lower plate 102 while descending toward the press-fit space 113. For reference, various forms capable of press-fitting the films may be applied to the pressing method used in the present disclosure, so a specific drawing of the pressing portion is omitted.

More specifically, the pressing portion (not shown) may include a press-fit plate in contact with the films and a film support protruding from the press-fit plate in the direction of the lower plate 102.

For example, the pressing portion (not shown) may have a plurality of supports formed at the same height and have a press-fit plate with a flat cross-section of a circle or square in the end portion of the plurality of supports, thereby causing both ends of the films to be cut by the cutting edge of the plurality of cut portions 114 forming the press-fit space 113 as the descending press-fit plate reaches the lower plate 102.

Furthermore, the film support may have a frame shape with a height corresponding to the minimum distance between the press-fit plate and the lower plate 102. This may be a configuration in which the film support fixes the films in an area where the plurality of cut portions 114 is not involved in the press-fit space 113, so the film support press-fits the lower plate 102 together with the films at the corresponding position, thereby preventing the central axis portion of the films from wrinkling by the force generated when both ends of the films are cut, thereby increasing the processing precision.

In the embodiments, the electrode notching mold for the secondary battery 10 may reduce the weight and replacement time of the mold by separating the plurality of lower modules 112 of the cutting portion 110 into the plurality of lower modules 112 that is detachable and may enable the product to be enlarged.

In addition, the plurality of lower modules 112 may change the product specifications according to the design requirements by further including modules having different shapes and sizes of the cutting holes, and even in this case, the effects of high mold replacement efficiency due to the detachable structure may be utilized again.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, and/or rearranged or supplemented by other components or their equivalents.

Therefore, other implementations, other embodiments, and equivalents to the claims are also within the scope of the following claims.

## Claims

1. An electrode notching mold for a secondary battery, the electrode notching mold comprising:
a cover portion comprising an upper plate in a plate shape and a lower plate spaced apart from and facing the upper plate;
a cutting portion comprising a plurality of upper modules coupled to a lower surface of the upper plate, spaced apart from and facing each other, and having a plate shape, a plurality of lower modules coupled in parallel to each of the plurality of upper modules on an upper surface of the lower plate and configured to form a press-fit space between the plurality of lower modules, and a plurality of cut portions each formed on facing surfaces of each of the plurality of lower modules and having a shape of a cutting blade edge;
a plurality of ascending-descending portions formed to be linearly driven and configured to ascend or descend the upper plate as a driving direction is provided between the upper plate and the lower plate perpendicular to the upper surface of the lower plate;
a plurality of guide portions having a pillar shape, having one end provided in each of the plurality of lower modules, and having another end penetrating each of the plurality of upper modules; and
a pressing portion provided in the upper plate and configured to press-fit films to the upper surface of the lower plate while descending toward the press-fit space.

2. The electrode notching mold of claim 1, wherein the plurality of lower modules is configured to form a plurality of pairs by further comprising a plurality of modules having different shapes and sizes of portions forming the press-fit space.

3. The electrode notching mold of claim 1, wherein each of the plurality of cut portions is formed to have a width and a height smaller than each of the films and is configured to cut a portion of the films, except for an electrode tab area.

4. The electrode notching mold of claim 1, wherein the plurality of lower modules is configured to form, as a plurality of cutting guide members having a frame shape is provided on a lower side of each of the plurality of cut portions, a cutting space in which a cut film descends to each of the plurality of cutting guide members.

5. The electrode notching mold of claim 1, wherein the pressing portion comprises a press-fit plate in contact with the films and a film support protruding from the press-fit plate in a direction of the lower plate.

6. The electrode notching mold of claim 5, wherein the film support has a frame shape with a height corresponding to a minimum distance between the press-fit plate and the lower plate.
